# EUROPEAN PATENT SPECIFICATION

(11) **EP 3 626 105 B1**
(45) Date of publication and mention of the grant of the patent: **24.03.2021**
(21) Application number: 19197921.0
(22) Date of filing: 18.09.2019
(51) Int. Cl.: A45D 20/10, A45D 20/12

(54) **DRYER**
TROCKNER
APPAREIL DE SÉCHAGE

(30) Priority: 19.09.2018 US 201862733478 P; 28.02.2019 KR 20190024048
(43) Date of publication of application: 25.03.2020
(73) Proprietor: LG Electronics Inc., Seoul 07336 (KR)
(72) Inventor: Yoo, Hyunsun, Seoul 08592 (KR); Chun, Jaehung, Seoul 08592 (KR); Eun, Yousook, Seoul 08592 (KR); Kim, Joogyeom, Seoul 08592 (KR); Kim, Sungkyung, Seoul 08592 (KR); Kim, Myongsun, Seoul 08592 (KR)
(74) Representative: Vossius & Partner Patentanwälte Rechtsanwälte mbB

(56) References cited:
- CN-A- 105 639 981
- US-A1- 2016 353 854

## Description

The present invention relates to a dryer for controlling a drying temperature based on a body temperature of a drying target.

A dryer for drying the human body needs to have the human body not subjected a laceration wound due to dry air when the dryer is used and to maintain an air temperature for dry to the extent that a user feels comfortable.

If a target to be dried is an infant or a pet, there is a need for a design for safe and effective dry because communication between the target and a user who performs dry is difficult.

In particular, an infant or a pet has very soft skin. Accordingly, if dry is performed at a temperature quite different from a body temperature, the infant or pet may take fright or may be subject to a laceration wound. Furthermore, if such a stimulus is repeated in the drying process, an infant or a pet may evade dry.

CN 105 639 981 A discloses a control method of hair dryer, which comprises detecting a temperature of hair in real time, comparing the detected temperature with a present temperature range, and controlling a heater current and a fan speed to adjust a temperature of outgoing air.

The present invention discloses a dryer according to claim 1. First, the present invention provides a dryer capable of minimizing a stimulus attributable to a difference between a body temperature and a drying temperature.

Second, the present invention provides a dryer capable of minimizing a stimulus attributable to a difference between a body temperature and a drying temperature by incorporating the distance from a drying target to the dryer.

A dryer according to an embodiment of the present invention controls a drying temperature based on a body temperature of a drying target.

Specifically, the dryer according to an embodiment of the present invention includes a controller which can operate a pre-warm mode when a body temperature is lower than a reference temperature.

The controller controls a heater so that the dryer operates at a pre-warm temperature higher than the body temperature and lower than the reference temperature in the pre-warm mode.

The reference temperature is a temperature lower than a suggested temperature to some extent.

The suggested temperature is a temperature suitable for the execution of drying, at least, depending on a drying target.

The controller is configured to specify a drying target as one of a plurality of previously stored drying targets.

The dryer may further comprises a user interface device including a touch input panel, an optical reading device or a wireless communication device, and the controller may specify the drying target based on information input via the user interface device.

The controller derives a suggested temperature and a reference temperature. The reference temperature is lower than the suggested temperature by a given temperature based on the specified drying target.

The pre-warm temperature is higher than the body temperature and may be lower than a mean value of the reference temperature and the body temperature.

The controller increases the pre-warm temperature as drying is in progress.

The controller may raise the pre-warm temperature at a constant rate.

The controller raises the pre-warm temperature in a stepwise form.

The dryer further includes a temperature controller configured to control temperature of the transmitted air. When the pre-warm mode is entered, the controller may limit an upper limit temperature of the temperature controller to a temperature obtained by adding a difference between the suggested temperature and the reference temperature to the body temperature.

The controller releases the pre-warm mode when the body temperature is the reference temperature or more.

The dryer further includes a distance sensor configured to detect the distance from the drying target to the dryer. The controller may control the reference temperature and the pre-warm temperature based on the distance from the drying target.

The controller may raise the reference temperature and the pre-warm temperature if the distance from the drying target is greater than a reference distance.

The controller may lower the reference temperature and the pre-warm temperature if the distance from the drying target is smaller than the reference distance.

The controller may deactivate the pre-warm mode based on a user's choice.

Means for solving the problems that has not been described above may be sufficiently derived from the description relating to embodiments of the present invention.

### BRIEF DESCRIPTION OF THE DRAWINGS

FIG. 1 is a perspective view of a dryer according to an embodiment of the present invention.
FIG. 2 is a cross-sectional view of the dryer shown in FIG. 1.
FIG. 3 is an operation sequence diagram of a controller according to an embodiment of the present invention.
FIG. 4 is a diagram showing a method of selecting a drying target according to an embodiment of the present invention.
FIG. 5 is a diagram showing a temperature-rising form of a pre-warm temperature according to an embodiment of the present invention.
FIG. 6 illustrates contents displayed in a display device according to an embodiment of the present invention.
FIG. 7 is a perspective view showing the state in which a drying target is detected in the state in which the dryer has been held in a cradle according to an embodiment of the present invention.

The advantages and features of the present invention and a method of achieving them will become apparent with reference to the embodiments described in detail below together with the accompanying drawings. However, the present invention is not limited to the embodiments set forth herein but may be embodied in many different forms, and these embodiments are provided so that the disclosure of the present invention is complete and that those skilled in the art will fully understand the scope of the present invention, and the present invention is only defined by the scope of the claims. Same reference numerals designate same elements throughout the specification.

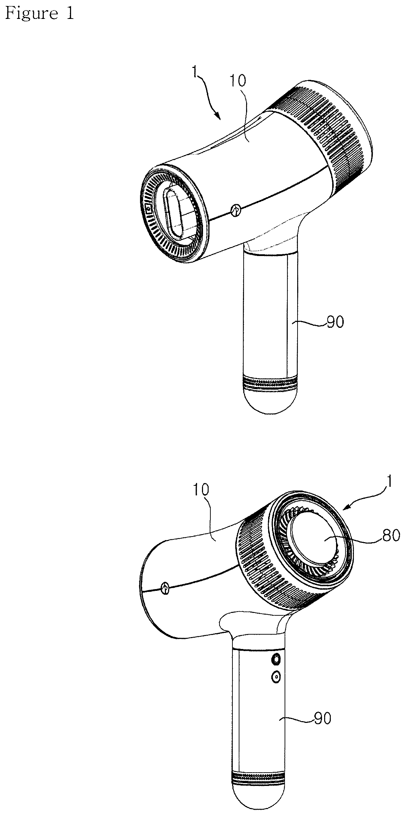

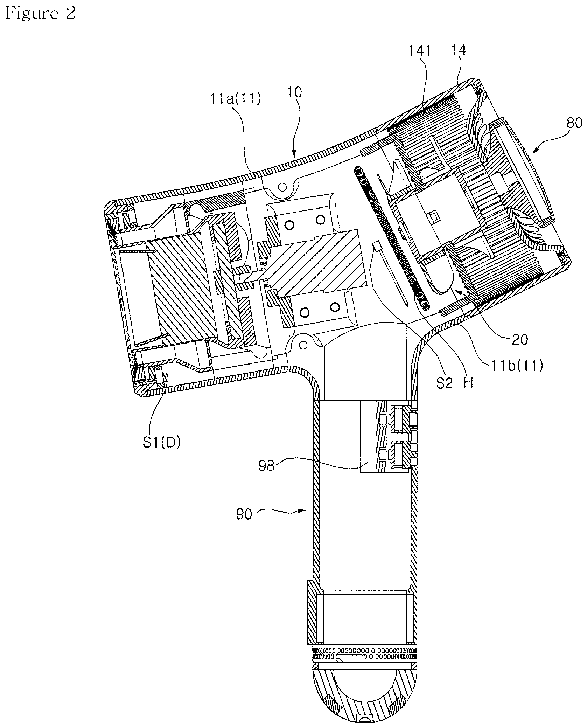

Hereinafter, a dryer 1 according to an embodiment of the present invention is described with reference to FIGS. 1 and 2.

The dryer 1 includes a hollow casing 10, a fan 20 received in the casing 10 and configured to receive external air and blow air, and a heater H positioned at the downstream of the fan and configured to heat air.

More specifically, the hollow casing 10 may include a casing body 11 having an upper casing 11a and a lower casing 11b integrated to form a cylindrical tube having a front open and a cylindrical cap 14 coupled to the rear of the casing body 11 and having a plurality of through holes 141 for introducing air formed therein.

Accordingly, air input through the through holes 141 is moved to the front opening through the casing body 11.

"Couple" or "connect" or "derivatives thereof described above or to be described later means that two or more elements are integrated or assembled according to a known connection method, such as fusion, adhesion, forced insertion, screw coupling, bolt fastening, or a key connection.

The ventilation fan 20 is received in the casing, and inputs external air to the casing 10 and simultaneously blows air to the front opening of the casing as described above.

The heater H positioned at the downstream of the fan may be configured as a ring-shaped coil heater, and heats air blown from the fan 20.

However, the arrangement structure of the fan 20 and the heater H is not limited to the writing and contents disclosed in the drawings, and may include a range that the design of the arrangement structure can be easily changed by those skilled in the art.

A grip 90 coupled to the lower side of the casing 10 may have a barrel shape protruded to the downward of the casing 10, and is a portion held by a user when dry is performed.

A display device (a user interface device) 80 may display driving information of the dryer, and may display a temperature and an operating time, for example. This display device 80 may include a touch input panel through which a user can input information.

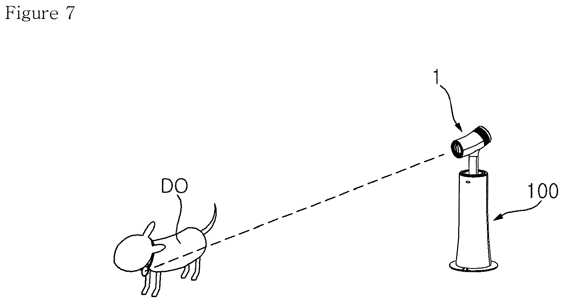

The dryer 1 according to an embodiment of the present invention includes an external temperature sensor S1. The external temperature sensor S1 detects a temperature of a drying target DO (refer to FIG. 7). Specifically, the temperature sensor S₁ detects a body temperature BT of the drying target DO, more specifically, a surface temperature of the drying target DO.

The external temperature sensor S1 may be a contactless temperature sensor.

For example, the external temperature sensor may include an infrared temperature sensor.

However, the type of external temperature sensor S1 is not limited the writing, and may include a range that those skilled in the art may easily select a sensor as a contactless temperature sensor.

In the dryer 1 according to an embodiment of the present invention, the external temperature sensor S1 can detect the body temperature BT of the drying target DO conveniently while not stimulating the drying target DO by contactlessly detecting the temperature BT of the drying target DO.

The dryer 1 according to an embodiment of the present invention includes an air temperature sensor S2 for detecting a temperature of air that is heated by the heater H and blown.

For example, the air temperature sensor S2 may be positioned at the downstream of the heater H. A pair of the air temperature sensors S2 may be positioned on the left and right in front of the heater H, thereby being capable of increasing accuracy.

A controller 98 operates in conjunction with the external temperature sensor S1, the air temperature sensor S2 and the heater H. Specifically, the controller may control the heater H based on a body temperature BT of the drying target DO detected by the external temperature sensor S1 and a temperature of blown air detected by the air temperature sensor S2.

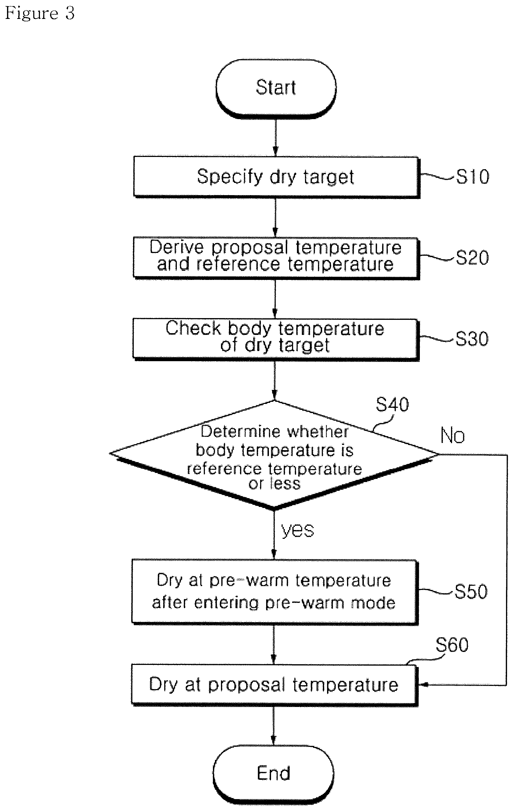

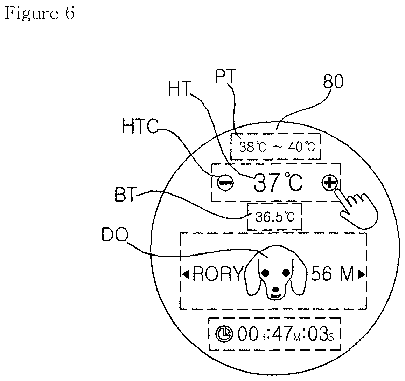

This is described in detail with reference to FIGS. 3 to 6.

The controller 98 specifies the drying target DO (S10). The dryer 1 according to an embodiment of the present invention may optimize the drying process for the drying target DO by controlling a suggested temperature PT and a reference temperature ST in accordance with the drying target DO.

Specifically, the controller 98 is controlled to specify the drying target DO as one of previously stored drying targets DO.

A user may previously store a drying target DO in the controller 98 through the Internet or mobile app operating in conjunction with the controller 98. However, a method or means for storing the drying target DO in the controller 98 is not limited to the writing, and may include a range which can be easily applied by those skilled in the art.

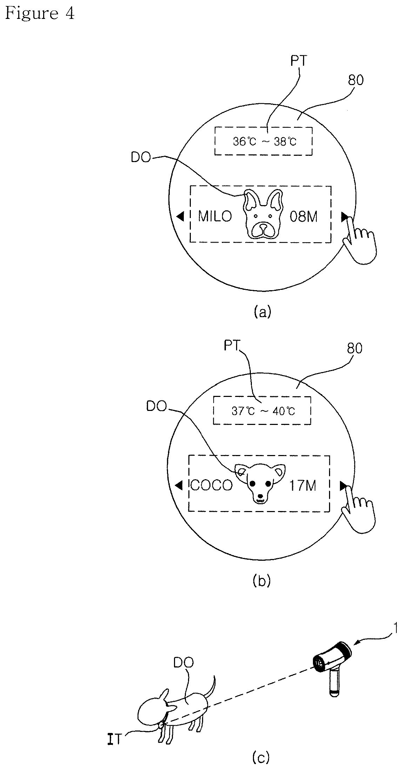

Next, referring to FIG. 4(a) and 4(b), the drying targets DO stored in the controller 98 is displayed on the display device 80. A user may specify the drying target DO by selecting a target DO to be actually dried among graphic screens indicative of previously stored drying targets DO.

Furthermore, referring to FIG. 4(c), the dryer 1 may automatically recognize and select the drying target DO without the selection of the drying target DO by a user.

Specifically, the drying target DO may wear an identification tag IT by which the drying target DO is distinguished from other drying targets DO.

The controller 98 of the dryer 1 specifies a drying target DO, which may correspond to a recognized identification tag IT, by recognizing and selecting a unique identification tag IT.

The identification tag IT may be formed of an accessory, such as a necklace or an anklet, but the type of identification tag IT is not limited to the writing or contents disclosed in the drawing. The identification tag IT may include a range which can be easily designed by those skilled in the art.

The controller 98 is connected to the identification tag IT wirelessly, and may recognize the identification tag IT.

Specifically, the controller 1 and the identification tag IT may include wireless communication units (not shown), and may exchange data. For example, if the wireless communication unit includes an NFC module and is tagged within a given distance, the controller 1 and the identification tag IT may perform wireless communication with each other.

However, a method and configuration for recognizing, by the controller 98, the identification tag IT is not limited to the writing, and may include a range which can be easily designed by those skilled in the art.

The controller 98 derives a suggested temperature PT based on information of a specified drying target DO, and may display the suggested temperature PT on the display device 80.

The controller 98 may derive the suggested temperature PT based on the age and species of the specified drying target DO (S20). The suggested temperature PT is a temperature suitable for executing dry, and may be a numerical value or range. Specifically, the species (e.g., a dog, a cat, an infant, a snake or a mouse) of the drying target DO, and the subclass (e.g., in the case of a dog, a Jindo dog, a Sapsal dog or dashshund) of species may be taken into consideration.

For example, in the case of a dog, a preference temperature of an adult dog and a preference temperature of a puppy are different. Furthermore, a preference temperature is different depending on a long hair dog or a short hair dog in specifies. Accordingly, the controller 98 may derive a suggested temperature PT at which optimized dry can be performed based on such information of a specified drying target DO.

Furthermore, the controller 98 derives a reference temperature ST along with the suggested temperature PT (S20).

The reference temperature ST is lower than the suggested temperature PT by a given temperature, and may be a temperature at which stress starts to occur when dry is performed due to a great difference between the reference temperature ST and the suggested temperature PT.

That is, if a drying target DO is dried at a suggested temperature PT in the state in which a body temperature BT is lower than a reference temperature ST, the drying target DO may feel hot and suffer from stress.

In contrast, if the drying target DO is dried at the suggested temperature PT in the state in which the body temperature BT is higher than the reference temperature ST, the drying target DO may be dried comfortably without feeling hot.

The dryer 1 according to an embodiment of the present invention can maximize dry optimization by controlling a drying temperature with consideration taken of the state of a drying target DO when dry is performed in addition to common information of the drying target DO.

Additionally, the reference temperature ST is not a temperature having a specific numerical value, and is a temperature calculated by the controller 98 based on a specified drying target DO and a specified suggested temperature PT.

The controller 98 may check a body temperature BT of the drying target DO using the external temperature sensor S1 (S30).

However, the sequence that the suggested temperature PT and the reference temperature ST are derived (S20) and the check of the body temperature BT of the drying target DO (S30) is not limited to the writing or the contents disclosed in the specification. The check of the body temperature BT of the drying target DO (S30) may be anterior to the derivation of the suggested temperature PT and the reference temperature ST (S30).

Dryer optimization based on the body temperature BT of the drying target DO, a suggested temperature PT and a reference temperature ST is described in detail below.

When the body temperature BT is lower than the reference temperature ST (S40), the controller 98 of the dryer 1 according to an embodiment of the present invention controls the heater H to enter a pre-warm mode HM (not shown) so that dry is performed at a pre-warm temperature HT higher than the body temperature BT and lower than the reference temperature ST in the pre-warm mode HM (S50).

Specifically, if dry is performed at the suggested temperature PT in the state in which the body temperature BT of the drying target DO is lower than the reference temperature ST, the drying target DO may feel hot and suffer from stress due to sudden hot air.

Accordingly, when the body temperature BT is lower than the reference temperature ST, the controller 98 may enter the pre-warm mode HM, may start dry at the pre-warm temperature HT of a level at which the drying target DO does not feel hot or suffer from stress at a current body temperature BT, and may perform safe and comfortable dry.

In this specification, a pre-warm temperature HT is not a temperature having a specific numerical value, but is a drying temperature at which a drying target DO does not feel hot or suffer from stress at a current body temperature BT. A pre-warm temperature HT is a temperature derived by the controller 98 by comprehensively taking into consideration a body temperature BT, a suggested temperature PT, etc.

For example, a pre-warm temperature HT may be higher than a body temperature BT and may be lower than a mean value of a reference temperature ST and the body temperature BT. The pre-warm temperature HT may be designated in a range adjacent to the body temperature BT in order to prevent a drying target DO from feeling hot or suffering from stress in the initial process of dry.

If a difference between the pre-warm temperature HT and the body temperature BT is very small, a dry time may be excessively long. If a difference between the pre-warm temperature and the body temperature BT is excessively great, a drying target DO may feel hot or suffer from stress.

However, the pre-warm temperature HT is not limited to the writing, and may include a range which can be easily designed by those skilled in the art within a temperature range that the drying target DO does not feel hot or suffer from stress between the body temperature BT and the reference temperature ST.

The controller 98 may increase the pre-warm temperature HT based on the progress of dry.

If dry is performed at the pre-warm temperature HT higher than the body temperature BT, the body temperature BT rises and thus the pre-warm temperature HT may also rise.

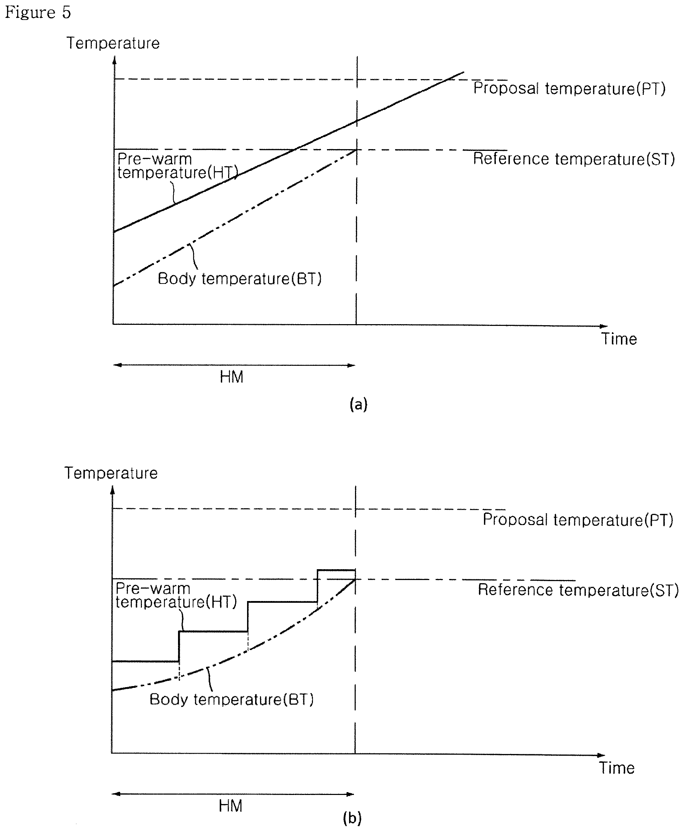

Referring to FIG. 5(a), the controller 98 may raise the pre-warm temperature HT at constant velocity. The body temperature BT of the drying target DO increases by dry at the pre-warm temperature HT, and the pre-warm temperature HT may rise at constant velocity by incorporating the risen body temperature.

However, the temperature-rising rate of the pre-warm temperature HT is not limited to the slope of the graph disclosed in the drawing.

Furthermore, referring to FIG. 5(b), the controller 98 may raise the pre-warm temperature HT in a stepwise form.

In this specification, the meaning that the temperature rises in a stepwise form is a concept that the temperature rises regularly, shown in FIG. 5(a), and means that a temperature-rising section and a temperature maintenance section are present together.

The temperature-rising method of the pre-warm temperature HT is not limited to the above type, and may include a range that those skilled in the art can select a proper temperature-rising method while checking the state of a drying target DO in a drying process.

Furthermore, the dryer 1 according to an embodiment of the present invention may include a temperature controller HTC capable of controlling an increase or decrease of a heated temperature.

However, in the pre-warm mode HM, the controller 98 may limit the upper limit of the temperature controller HTC from a current body temperature BT to a difference between the suggested temperature PT and the reference temperature ST.

Specifically, a user may control a drying temperature in such a manner that the temperature controller HTC is displayed on the display device 80. Accordingly, although a drying temperature is set very high due to a user's mistake for the temperature controller HTC, the controller 98 specifies the upper limit of the drying temperature in the pre-warm mode HM in order to prevent a drying target DO from suffering burns or suffering from stress.

Referring back to FIG. 5, when the body temperature BT is higher than the reference temperature ST, the controller 98 releases the pre-warm mode HM. The body temperature BT during a drying process may be detected using the external temperature sensor S1 while dry is caused, but a method of detecting the body temperature BT in the drying process is not limited thereto, and may include a range which may be applied by those skilled in the art.

When the pre-warm mode HM is released, dry is performed at the suggested temperature PT (S60).

Referring back to FIG. 2, the dryer 1 according to an embodiment of the present invention may include a distance sensor D for detecting the distance from the drying target DO.

The distance sensor D may be positioned at the front of the casing 10 along with the external temperature sensor S1, and may detect the distance from the drying target DO.

For example, a laser sensor may be used as the distance sensor D, but the type and arrangement structure of distance sensor D are not limited to the writing and the drawing.

For another example, the controller 98 may automatically recognize the distance from a drying target DO while detecting the identification tag IT of the drying target DO.

A temperature of dry air that comes in contact with a surface of the drying target DO and raises the body temperature BT is influenced by the distance between the drying target DO and the dryer 1 in addition to an air temperature when the air is blown from the front of the casing 10.

Accordingly, the controller 98 of the dryer 1 according to an embodiment of the present invention may control the reference temperature ST and the pre-warm temperature HT based on the distance from the drying target DO using the distance sensor D so that effective dry is performed.

Referring to FIG. 7, the dryer 1 may dry the drying target DO in the state in which the dryer has been seated at the top of a cradle 100.

The position of the dryer 1 is fixed by the cradle 100. The distance between the dryer 1 and the drying target DO is different depending on the distance between the drying target DO and the cradle 100.

Accordingly, if the distance from the drying target DO is greater than a reference distance, the controller 98 may raise the reference temperature ST and the pre-warm temperature HT.

In contrast, if the distance from the drying target DO is smaller than the reference distance, the controller 98 may lower the reference temperature ST and the pre-warm temperature HT so that dry is optimized by incorporating the distance from the drying target DO.

The reference distance is a distance from the drying target DO which is randomly set by the controller 98. After a suggested temperature PT and a pre-warm temperature HT are first derived based on a reference distance, the suggested temperature PT and the pre-warm temperature HT may be changed based on a change in the reference distance.

The controller 98 according to an embodiment of the present invention may selectively deactivate the pre-warm mode HM.

That is, the dryer 1 according to an embodiment of the present invention can selectively activate the pre-warm mode HM. Accordingly, a user can use a dry function regardless of the pre-warm mode HM in various cases in addition to the case where an infant or a pet is dried.

The dryer of the present invention has one or more of the following effects or other effects.

First, the dryer according to an embodiment of the present invention can minimize a stimulus attributable to a temperature difference occurring in a drying process because it performs dry at a pre-warm temperature having a smaller difference than the body temperature of a drying target.

Second, the dryer according to an embodiment of the present invention can minimize a stimulus attributable to a temperature difference occurring in a drying process because it includes the distance sensor and a reference temperature and a pre-warm temperature are controlled based on the distance from a drying target.

## Claims

1. A dryer for controlling a drying temperature based on a body temperature of a drying target, comprising:
a fan (20) configured to blow air;
a heater (H) configured to heat the blown air;
an external temperature sensor (S1) configured to detect the body temperature of the drying target;
an air temperature sensor (S2) configured to detect a temperature of the heated air; and
a controller (98) configured to:
specify the drying target with one of a plurality of drying targets previously stored in the dryer;
derive, based on information on the specified drying target, a suggested temperature (PT) and a reference temperature (ST) which is lower than the suggested temperature (PT) by a given temperature;
operate a pre-warm mode when the body temperature is lower than the reference temperature (ST) and thereby to control the heater (H) so that drying is performed with the heated air of a pre-warm temperature (HT) which is higher than the body temperature and lower than the reference temperature (ST) in the pre-warm mode, the pre-warm temperature (HT) increasing as the drying proceeds in the pre-warm mode;
release the pre-warm mode when the body temperature is higher than the reference temperature (ST); and
when the pre-warm mode is released, perform drying with the heated air of the suggested temperature (PT).

2. The dryer of claim 1, further comprising a user interface device (80) including a touch input panel, an optical reading device or a wireless communication device, and wherein the controller (98) is configured to specify the drying target based on information input via the user interface device (80).

3. The dryer of any one of claims 1 to 2, wherein the pre-warm temperature (HT) is higher than the body temperature and is lower than a mean value of the reference temperature (ST) and the body temperature.

4. The dryer of claim 1, wherein the controller (98) is configured to increase the pre-warm temperature (HT) at a constant rate.

5. The dryer of claim 1, wherein the controller (98) is configured to increase the pre-warm temperature (HT) in a stepwise form.

6. The dryer of any one of claims 1 to 5, further comprising a temperature controller (HTC) configured to control a temperature of the heated air, wherein when the controller (98) operates the pre-warm mode, the controller (98) is configured to limit an upper limit temperature of the temperature controller (HTC) to a temperature obtained by adding a difference between the suggested temperature (PT) and the reference temperature (ST) to the body temperature.

7. The dryer of any one of claims 1 to 6, further comprising a distance sensor (D) configured to detect a distance from the drying target to the dryer,
wherein the controller (98) is configured to control the reference temperature (ST) and the pre-warm temperature (HT) based on the distance.

8. The dryer of claim 7, wherein the controller (98) is configured to increase the reference temperature (ST) and the pre-warm temperature (HT) if the distance is greater than a reference distance.

9. The dryer of claim 7, wherein the controller (98) is configured to lower the reference temperature (ST) and the pre-warm temperature (HT) if the distance is smaller than a reference distance.

10. The dryer of any one of claims 1 to 9, wherein the controller (98) is configured to deactivate the pre-warm mode based on a user's input.

## Patentansprüche

1. Trockner zum Steuern einer Trockentemperatur basierend auf einer Körpertemperatur eines Trocknungsziels mit:
einem Gebläse (20), das ausgebildet ist, Luft zu blasen;
einer Heizung (H), die ausgebildet ist, die geblasene Luft zu erwärmen;
einem Außentemperatursensor (S1), der ausgebildet ist, die Körpertemperatur des Trocknungsziels zu erfassen;
einem Lufttemperatursensor (S2), der ausgebildet ist, eine Temperatur der erwärmten Luft zu erfassen; und
einer Steuerung (98), die ausgebildet ist,
das Trocknungsziel als eines von mehreren vorab im Trockner gespeicherten Trocknungszielen zu spezifizieren,
basierend auf Informationen über das spezifizierte Trocknungsziel, eine vorgeschlagene Temperatur (PT) und eine Referenztemperatur (ST) abzuleiten, die um eine gegebene Temperatur niedriger als die vorgeschlagene Temperatur (PT) ist,
einen Vorwärmmodus zu betreiben, wenn die Körpertemperatur niedriger als die Referenztemperatur (ST) ist, und dadurch die Heizung (H) so zu steuern, dass das Trocknen mit der erwärmten Luft, die eine Vorwärmtemperatur (HT) hat, die höher als die Körpertemperatur und niedriger als die Referenztemperatur (ST) ist, im Vorwärmmodus durchgeführt wird, wobei die Vorwärmtemperatur (HT) mit zunehmendem Trocknen im Vorwärmmodus zunimmt,
den Vorwärmmodus auszulösen, wenn die Körpertemperatur höher als die Referenztemperatur (ST) ist, und
wenn der Vorwärmmodus ausgelöst wird, das Trocknen mit der erwärmten Luft durchzuführen, die die vorgeschlagene Temperatur (PT) hat.

2. Trockner nach Anspruch 1, der ferner eine Benutzerschnittstellenvorrichtung (80) mit einem Tasteingabe-Bedienfeld, einer optischen Lesevorrichtung oder einer drahtlosen Kommunikationsvorrichtung umfasst, und wobei die Steuerung (98) ausgebildet ist, das Trocknungsziel basierend auf Informationen zu spezifizieren, die über die Benutzerschnittstellenvorrichtung (80) eingegeben werden.

3. Trockner nach einem der Ansprüche 1 bis 2, wobei die Vorwärmtemperatur (HT) höher als die Körpertemperatur und niedriger als ein Mittelwert der Referenztemperatur (ST) und der Körpertemperatur ist.

4. Trockner nach Anspruch 1, wobei die Steuerung (98) ausgebildet ist, die Vorwärmtemperatur (HT) mit konstanter Geschwindigkeit zu erhöhen.

5. Trockner nach Anspruch 1, wobei die Steuerung (98) ausgebildet ist, die Vorwärmtemperatur (HT) schrittweise zu erhöhen.

6. Trockner nach einem der Ansprüche 1 bis 5, der ferner eine Temperatursteuerung (HTC) aufweist, die ausgebildet ist, eine Temperatur der erwärmten Luft zu steuern,
wobei, wenn die Steuerung (98) den Vorwärmmodus betreibt, die Steuerung (98) ausgebildet ist, eine obere Grenztemperatur der Temperatursteuerung (HTC) auf eine Temperatur zu begrenzen, die durch Addieren einer Differenz aus der vorgeschlagenen Temperatur (PT) und der Referenztemperatur (ST) zur Körpertemperatur erhalten wird.

7. Trockner nach einem der Ansprüche 1 bis 6, der ferner einen Abstandssensor (D) aufweist, der ausgebildet ist, einen Abstand zwischen dem Trocknungsziel und dem Trockner zu erfassen,
wobei die Steuerung (98) ausgebildet ist, die Referenztemperatur (ST) und die Vorwärmtemperatur (HT) basierend auf dem Abstand zu steuern.

8. Trockner nach Anspruch 7, wobei die Steuerung (98) ausgebildet ist, die Referenztemperatur (ST) und die Vorwärmtemperatur (HT) zu erhöhen, wenn der Abstand größer als ein Referenzabstand ist.

9. Trockner nach Anspruch 7, wobei die Steuerung (98) ausgebildet ist, die Referenztemperatur (ST) und die Vorwärmtemperatur (HT) zu reduzieren, wenn der Abstand kleiner als ein Referenzabstand ist.

10. Trockner nach einem der Ansprüche 1 bis 9, wobei die Steuerung (98) ausgebildet ist, den Vorwärmmodus basierend auf einer Benutzereingabe zu deaktivieren.

## Revendications

1. Appareil de séchage pour la commande d'une température de séchage sur la base d'une température corporelle d'une cible de séchage, comprenant :
un ventilateur (20) configuré pour souffler de l'air ;
un chauffage (H) configuré pour chauffer l'air soufflé ;
un capteur de température externe (S1) configuré pour détecter la température corporelle de la cible de séchage ;
un capteur de température d'air (S2) configuré pour détecter une température de l'air chauffé ; et
un dispositif de commande (98) configuré pour :
spécifier la cible de séchage avec une d'une pluralité de cibles de séchage précédemment enregistrées dans l'appareil de séchage ;
déduire, sur la base de l'information sur la cible de séchage spécifiée, une température suggérée (PT) et une température de référence (ST) qui est inférieure à la température suggérée (PT) d'une température donnée ;
actionner un mode de préchauffage lorsque la température corporelle est inférieure à la température de référence (ST) et ainsi commander le chauffage (H) de sorte que le séchage soit réalisé avec l'air chauffé d'une température de préchauffage (HT) qui est supérieure à la température corporelle et inférieure à la température de référence (ST) dans le mode de préchauffage, la température de préchauffage (HT) augmentant lorsque le séchage se déroule dans le mode de préchauffage ;
libérer le mode de préchauffage lorsque la température corporelle est supérieure à la température de référence (ST) ; et
lorsque le mode de préchauffage est libéré, réaliser le séchage avec l'air chauffé de la température suggérée (PT).

2. Appareil de séchage selon la revendication 1, comprenant en outre un dispositif d'interface utilisateur (80) incluant
un panneau d'entrée tactile, un dispositif de lecture optique ou un dispositif de communication sans fil, et dans lequel le dispositif de commande (98) est configuré pour spécifier la cible de séchage sur la base d'entrée d'information via le dispositif d'interface utilisateur (80).

3. Appareil de séchage selon l'une quelconque des revendications 1 à 2, dans lequel la température de préchauffage (HT) est supérieure à la température corporelle et est inférieure à une valeur moyenne de la température de référence (ST) et de la température corporelle.

4. Appareil de séchage selon la revendication 1, dans lequel le dispositif de commande (98) est configuré pour augmenter la température de préchauffage (HT) à une vitesse constante.

5. Appareil de séchage selon la revendication 1, dans lequel le dispositif de commande (98) est configuré pour augmenter la température de préchauffage (HT) sous une forme progressive.

6. Appareil de séchage selon l'une quelconque des revendications 1 à 5, comprenant en outre un dispositif de commande de température (HTC) configuré pour commander une température de l'air chauffé,
dans lequel lorsque le dispositif de commande (98) actionne le mode de préchauffage, le dispositif de commande (98) est configuré pour limiter une température limite supérieure du dispositif de commande de température (HTC) à une température obtenue par ajout d'une différence entre la température suggérée (PT) et la température de référence (ST) à la température corporelle.

7. Appareil de séchage selon l'une quelconque des revendications 1 à 6, comprenant en outre un capteur de distance (D) configuré pour détecter une distance de la cible de séchage par rapport à l'appareil de séchage,
dans lequel le dispositif de commande (98) est configuré pour commander la température de référence (ST) et la température de préchauffage (HT) sur la base de la distance.

8. Appareil de séchage selon la revendication 7, dans lequel le dispositif de commande (98) est configuré pour augmenter la température de référence (ST) et la température de préchauffage (HT) si la distance est supérieure à une distance de référence.

9. Appareil de séchage selon la revendication 7, dans lequel le dispositif de commande (98) est configuré pour abaisser la température de référence (ST) et la température de préchauffage (HT) si la distance est inférieure à une distance de référence.

10. Appareil de séchage selon l'une quelconque des revendications 1 à 9, dans lequel le dispositif de commande (98) est configuré pour désactiver le mode de préchauffage sur la base d'une entrée utilisateur.
